# FASCICULE DE BREVET EUROPEEN

(11) **EP 1 029 493 B1**
(45) Date de publication et mention de la délivrance du brevet: **31.07.2002**
(21) Numéro de dépôt: 00870021.3
(22) Date de dépôt: 16.02.2000
(51) Int. Cl.: A47J 37/12

(54) **Dispositif de cuisson**
Kochvorrichtung
Cooking device

(30) Priorité: 19.02.1999 BE 9900113
(43) Date de publication de la demande: 23.08.2000
(73) Titulaire: Ariam S.P.R.L., 1450 Chastre (BE)
(72) Inventeur: Jénicot, Jean Marie, 1450 Chastre (BE)
(74) Mandataire: Powis de Tenbossche, Roland

(56) Documents cités:
- EP-A- 0 649 622
- DE-A- 3 542 909
- US-A- 3 646 882
- US-A- 3 933 645
- US-A- 5 782 164

## Description

La présente invention a pour objet un appareil de cuisson ou de traitement thermique par immersion, domestique ou semi-industriel comprenant une cuve de cuisson destinée à contenir un liquide porté à une température adaptée à la cuisson ou au traitement thermique d'un aliment ou un liquide alimentaire provoquant durant la cuisson ou le traitement thermique au-dessus du niveau supérieur du bain liquide, une mousse ou une écume ou une émulsion lors de la cuisson ou au moins lors d'une partie de celle-ci, ladite cuve présentant un fond, une ou des parois latérales, et un bord extrême supérieur. Un appareil de cuisson selon le préambule de la revendication 1 est connu du document US-A-3646882.

En particulier, la présente invention a pour objet une friteuse domestique ou semi-industrielle.

Lors de la cuisson d'aliments dans un bain d'huile ou de graisse liquide, l'eau contenue dans lesdits aliments se transforme en vapeur et forme à la surface du bain d'huile ou de graisse une mousse ou émulsion d'eau et d'huile. Au cas où les aliments à cuire contiennent une trop grande quantité d'eau pour le volume de la cuve, le niveau supérieur de la mousse ou de l'émulsion peut atteindre le niveau supérieur de la cuve, voire déborder en dehors de la cuve. Un niveau de mousse ou d'émulsion trop important dans la cuve engendre des problèmes au niveau de la filtration, lorsque la friteuse est équipée de filtres pour fumées. En effet, dans ce cas, des quantités importantes de graisse se déposeront sur le filtre et/ou sur le système d'extraction de fumées, de sorte que de tels filtres seront rapidement peu efficients pour la filtration et devront soit être remplacés, soit lavés.
D'autre part, lorsque de la mousse ou émulsion eau/vapeur-huile ou graisse vient à déborder hors de la cuve, des dangers de brûlure, de court circuits, d'électrocution, d'hygiène, d'incendie peuvent être créés. Ces dangers sont dus au fait que de l'huile, de la graisse et de l'eau viennent se déposer sur des parois extérieures de l'enveloppe entourant la cuve et/ou viennent à pénétrer dans l'espace situé entre l'enveloppe extérieure de la friteuse et la cuve et/ou viennent à toucher un support amovible étanche portant le panier ou la résistance et qui est destiné à être logé dans une ouverture de la cuve et de l'enveloppe et/ou viennent à pénétrer dans des contacts électriques et/ou viennent à rentrer dans le filtre ou dans le système d'aspiration des fumées.

La présente invention a pour objet un appareil de cuisson comportant un moyen pour réduire le risque que de la mousse ou émulsion ne dépasse un niveau dans la cuve, en particulier ne déborde hors de la cuve, et en particulier pour éviter sensiblement tout risque que de la mousse ou émulsion ne dépasse un niveau dans la cuve, en particulier ne déborde hors de la cuve.

L'appareil selon l'invention (voir la revendication 1) qui est du type décrit au premier paragraphe du présent mémoire est essentiellement caractérisé en ce qu'il comporte ou est associé à un moyen de réception réceptionnant de la mousse, de l'écume ou de l'émulsion lorsque ladite mousse, écume ou émulsion atteint un niveau supérieur à un niveau prédéterminé dans la cuve, ladite mousse ou écume ou émulsion étant transformée en liquide dans ledit moyen, ledit moyen de réception guidant le liquide provenant de la transformation de ladite mousse ou écume ou émulsion en liquide dans la cuve jusqu'à un niveau situé en dessous du niveau supérieur de la phase liquide de la cuve, et en ce qu'il comporte un moyen empêchant sensiblement tout passage d'écume, de mousse ou d'émulsion dans le moyen de réception à un niveau situé en dessous du niveau supérieur de la phase liquide.

Selon une forme de réalisation avantageuse, ledit moyen de réception comporte ou présente (a) une chambre ou un canal de réception de mousse, d'écume ou d'émulsion et (b) une paroi présentant au moins un orifice situé en dessous du bord extrême de la cuve pour permettre le passage de mousse, d'écume ou d'émulsion par ledit orifice dans la chambre de réception lorsque ladite mousse, écume ou émulsion atteint un niveau supérieur à un niveau prédéterminé dans la cuve et/ou présentant un bord supérieur au moins partiellement situé en dessous du bord extrême de la cuve pour permettre le passage par débordement au-dessus d'au moins une partie dudit bord supérieur de mousse, d'écume ou d'émulsion dans la chambre de réception lorsque ladite mousse, écume ou émulsion atteint un niveau supérieur à un niveau prédéterminé dans la cuve. Dans cette forme de réalisation, l'appareil comporte avantageusement un moyen empêchant sensiblement tout passage d'écume, de mousse ou d'émulsion dans le moyen de réception en dessous dudit niveau prédéterminé.

Selon des formes de réalisation possibles, la chambre ou canal de réception présente un volume au moins égal à 2% du volume de la cuve. Bien qu'un tel volume s'est déjà avéré suffisant pour réceptionner de la mousse ou de l'émulsion pour assurer un niveau de mousse ou d'émulsion inférieur à un niveau prédéterminé, le volume de la chambre ou canal peut varier entre 2 et 20% du volume de la cuve. Il est clair que des volumes de la chambre de plus de 20% du volume de la cuve sont possibles pour assurer un niveau de mousse ou d'émulsion inférieur à un niveau prédéterminé.

Selon une particularité avantageuse d'une forme de réalisation, l'appareil comporte une ou plusieurs parois ou cloisons de séparation s'étendant dans la cuve le long d'une ou de parois latérales de celle-ci, de manière à définir entre ladite ou lesdites parois de séparation et ladite ou lesdites parois latérales, une ou plusieurs chambres de réception de mousse, d'écume ou d'émulsion. Ladite ou lesdites parois de séparation présentent (a) d'une part, au moins un orifice situé en dessous du bord extrême de la cuve pour permettre le passage de mousse, d'écume ou d'émulsion par ledit orifice dans la chambre de réception lorsque ladite mousse, écume ou émulsion atteint un niveau supérieur à un niveau prédéterminé dans la cuve et/ou présentant un bord supérieur au moins partiellement situé en dessous du bord extrême de la cuve pour permettre le passage par débordement au-dessus d'au moins une partie dudit bord supérieur de mousse, d'écume ou d'émulsion dans la chambre de réception lorsque ladite mousse, écume ou émulsion atteint un niveau supérieur à un niveau prédéterminé dans la cuve, et (b) d'autre part, un passage situé sous le niveau de la phase liquide et/ou un bord définissant avec le fond et/ou une paroi latérale un passage situé sous le niveau de la phase liquide. La ou les parois sont agencées dans la cuve pour empêcher sensiblement tout passage d'écume, de mousse ou d'émulsion dans la ou les chambres de réception en dessous dudit niveau prédéterminé.

L'appareil de cuisson suivant l'invention est avantageusement un appareil comprenant ou associé à au moins un panier destiné à contenir les aliments à cuire, ledit panier étant abaissé dans la cuve pour la cuisson des aliments. L'abaissement du panier dans la cuve peut être manuel (via éventuellement une poignée multi fonctionnelle) ou commandé par un mécanisme à moteur. Le panier de l'appareil de cuisson porte au moins une ou des parois de séparation agencées de manière à définir lorsque le panier est abaissée dans la cuve, entre ladite ou lesdites parois du panier et une ou des parois latérales de la cuve, une ou plusieurs chambres de réception de mousse, d'écume ou d'émulsion. Ladite ou lesdites parois du panier en position abaissée présentent (a) d'une part, au moins un orifice situé en dessous du bord extrême de la cuve pour permettre le passage de mousse, d'écume ou d'émulsion par ledit orifice dans la chambre de réception lorsque ladite mousse, écume ou émulsion atteint un niveau supérieur à un niveau prédéterminé dans la cuve et/ou présentant un bord supérieur au moins partiellement situé en dessous du bord extrême de la cuve pour permettre le passage par débordement au-dessus d'au moins une partie dudit bord supérieur de mousse, d'écume ou d'émulsion dans la chambre de réception lorsque ladite mousse, écume ou émulsion atteint un niveau supérieur à un niveau prédéterminé dans la cuve, et (b) d'autre part, un passage situé sous le niveau de la phase liquide et/ou un bord définissant avec le fond et/ou une paroi latérale un passage situé sous le niveau de la phase liquide. La ou les parois du panier en position abaissée sont agencées dans la cuve pour empêcher sensiblement tout passage d'écume, de mousse ou d'émulsion dans la ou les chambres de réception en dessous dudit niveau prédéterminé.

Selon une forme de réalisation avantageuse de cet appareil de cuisson, le panier est un panier ajouré présentant un fond, une ou des faces latérales et un bord supérieur, ledit panier portant le long de sa ou de ses faces latérales une ou des parois de séparation, dont le bord inférieur est agencé pour s'étendre sous le niveau de la phase liquide lorsque le panier est abaissé dans la cuve et dont le bord supérieur est agencé pour s'étendre au-dessus du niveau de la phase liquide. La chambre de réception est définie entre la ou les parois de séparation du panier et la ou les parois latérales de la cuve, tandis que la ou les parois de séparation du panier en position abaissée dans la cuve sont agencées pour empêcher sensiblement tout passage d'écume, de mousse ou d'émulsion dans la chambre de réception en dessous du niveau du bord supérieur de la ou des parois de séparation du panier.

De préférence, la ou les parois de séparation portées par le panier sont distantes des parois latérales de celui-ci, et avantageusement situées à l'extérieur du panier de manière à former une enveloppe ou cadre autour du panier.

Selon une forme de réalisation particulièrement avantageuse du panier, la ou les parois latérales du panier sont constituées d'une paroi pleine dont le bord inférieur est agencé pour empêcher lorsque le panier est en position abaissée dans la cuve, sensiblement tout passage d'écume, de mousse ou d'émulsion dans la chambre de réception en dessous du niveau du bord supérieur de la paroi de séparation du panier.

Selon un détail avantageux des paniers, ladite paroi de séparation n'est pas plane et présente de préférence une ondulation ou des plis formant une série de canaux sensiblement verticaux lorsque le panier est en position abaissée dans la cuve. Ces canaux permettent d'assurer un meilleur brassage de l'huile ou de la graisse présente dans le panier à un niveau supérieur du bord inférieur de la ou des parois de séparation.

Selon une particularité de paniers, la ou les parois de séparation et les parties ajourées du panier sont réalisées en des matériaux présentant sensiblement un même coefficient de dilatation.

Selon une forme de réalisation possible, la cuve présente des gorges dans lesquels coulissent les bords latéraux d'une paroi de séparation ou des rails le long desquels coulissent des gorges que présentent les bords latéraux d'une paroi de séparation.

Dans ce cas, il est avantageux que la paroi de séparation soit réalisée en un matériau présentant un coefficient de dilatation thermique au plus égal au coefficient de dilatation thermique de la cuve ou de la partie de la cuve située entre lesdits rails. De façon avantageuse, les gorges ou les rails s'étendent chacun le long d'une paroi latérale de la cuve sur une hauteur allant d'un niveau situé sous le niveau de liquide à un niveau situé au-dessus du niveau de liquide, avantageusement à un niveau proche du niveau prédéterminé à partir duquel une mousse, une écume ou une émulsion passe dans la chambre de réception.

Selon une autre forme de réalisation possible d'un appareil de cuisson suivant l'invention, la ou les parois de séparation forment un cadre sensiblement circulaire, rectangulaire ou carré prenant appui sur le fond de la cuve et/ou porté par une ou des parois latérales de la cuve.

De façon avantageuse, l'appareil suivant l'invention comporte une résistance électrique placée sous ou associée au fond de la cuve et/ou une résistance électrique placée dans la cuve.

En particulier, l'appareil suivant l'invention est une friteuse, ladite friteuse comportant de préférence un panier avantageusement avec poignée multi fonctionnelle et/ou un couvercle (filtant ou non, avec éventuellement un hublot) et/ou un système de filtration.

L'invention a également pour objet un panier de cuisson pour appareil de cuisson, en particulier pour friteuse. Ce panier suivant l'invention est un panier ajouré présentant un fond, une ou des faces latérales et un bord supérieur, ledit panier portant le long de sa ou de ses faces latérales une ou des parois de séparation, dont le bord inférieur est agencé pour s'étendre sous le niveau de la phase liquide lorsque le panier est abaissé dans la cuve et dont le bord supérieur est agencé pour s'étendre au-dessus du niveau de la phase liquide. La chambre de réception est définie entre la ou les parois de séparation du panier et la ou les parois latérales de la cuve, tandis que la ou les parois de séparation du panier en position abaissée dans la cuve sont agencées pour empêcher sensiblement tout passage d'écume, de mousse ou d'émulsion dans la chambre de réception en dessous du niveau du bord supérieur de la ou des parois de séparation du panier.

De préférence, la ou les parois de séparation portées par le panier sont distantes des parois latérales de celui-ci, et avantageusement situées à l'extérieur du panier de manière à former une enveloppe ou cadre autour du panier.

Selon une forme de réalisation particulièrement avantageuse du panier, la ou les parois latérales du panier sont constituées (a) d'une part, partiellement d'une partie ajourée tournée vers le fond (ajouré ou à tout le moins partiellement ajouré) du panier, et (b) d'autre part, d'une paroi de séparation tournée vers le bord supérieur du panier, ladite paroi de séparation étant agencée pour empêcher lorsque le panier est en position abaissée dans la cuve, sensiblement tout passage d'écume, de mousse ou d'émulsion dans la chambre de réception en dessous du niveau du bord supérieur de la paroi de séparation du panier.

Selon un détail avantageux des paniers, ladite paroi de séparation n'est pas plane et présente de préférence une ondulation ou des plis formant une série de canaux sensiblement verticaux lorsque le panier est en position abaissée dans la cuve. Ces canaux permettent d'assurer un meilleur brassage de l'huile ou de la graisse présente dans le panier à un niveau supérieur du bord inférieur de la ou des parois de séparation.

Selon une particularité de paniers, la ou les parois de séparation et les parties ajourées du panier sont réalisées en des matériaux présentant sensiblement un même coefficient de dilatation.

L'invention a encore pour objet un procédé de cuisson d'aliments dans un bain d'huile et/ou de graisse liquide au moyen d'une friteuse comprenant une cuve de cuisson contenant le bain d'huile ou de graisse et une résistance électrique plongée dans ladite cuve ou associée à une paroi de la cuve, dans lequel on divise le bain au moyen d'au moins une paroi en une première zone en contact avec la résistance électrique ou avec la paroi associée à la résistance électrique et en une deuxième zone chauffée essentiellement par transfert de chaleur de l'huile ou de la graisse de la première zone vers la deuxième zone, et dans lequel on cuit les aliments dans la première zone de manière à ce qu'uniquement en cas de formation de mousse ou d'émulsion au-dessus d'un niveau prédéterminé, de la mousse ou de l'émulsion passe dans la deuxième zone où elle se transforme sous forme d'huile ou de graisse liquide, de l'huile ou de la graisse de la deuxième zone passant alors dans la première zone dans le bas.

Des particularités et détails de l'invention ressortiront de la description détaillée suivante dans laquelle il est fait référence aux dessins ci-annexés. Dans ces dessins:
- la figure 1 est une vue en perspective d'une friteuse encastrable du type connu;
- la figure 2 est une vue en perspective d'une cuve de cuisson;
- la figure 3 est une vue en coupe selon la ligne III-III de la cuve de la figure 2 après placement de la paroi de séparation;
- la figure 4 est une vue d'une autre paroi de séparation qui peut être utilisée pour la cuve de la figure 2;
- la figure 5 est une vue d'une autre cuve de cuisson similaire à celle de la figure 2;
- la figure 6 est une vue en coupe selon les lignes VI-VI de la cuve de la figure 5 après placement des parois de séparation;
- la figure 7 est une vue en perspective éclatée d'une autre cuve de cuisson;
- la figure 8 est une vue de dessus de la cuve de la figure 7 après placement des parois de séparation;
- la figure 9 est une vue en perspective d'une autre cuve de cuisson;
- la figure 10 est une vue en coupe selon la ligne X-X de la cuve de la figure 9;
- la figure 11 est une vue en perspective d'un panier suivant l'invention;
- la figure 12 est une vue en coupe d'une friteuse munie du panier de la figure 11;
- la figure 13 est une vue en perspective d'un autre panier suivant l'invention;
- la figure 14 est une vue en coupe d'une friteuse munie du panier de la figure 13;
- la figure 15 est une vue d'une friteuse similaire à celle représentée à la figure 3.

La friteuse représentée à titre d'exemple uniquement est une friteuse encastrable du type connu (voir EP-A-0067730). Cette friteuse comprend : une enveloppe 1 qui peut être encastrable dans un meuble 2 ou qui peut prendre appui sur une table; une cuve de cuisson 2 dont le bord supérieur 3 prend appui sur l'enveloppe lorsque ladite cuve est insérée dans l'enveloppe 1, une résistance chauffante 4 portée par un support de commande 5. La cuve de cuisson présente avantageusement des traits pour indiquer le niveau N1 maximal d'huile ou de graisse admissible dans la cuve et le niveau N2 minimal d'huile ou de graisse admissible dans la cuve pour assurer une bonne cuisson.

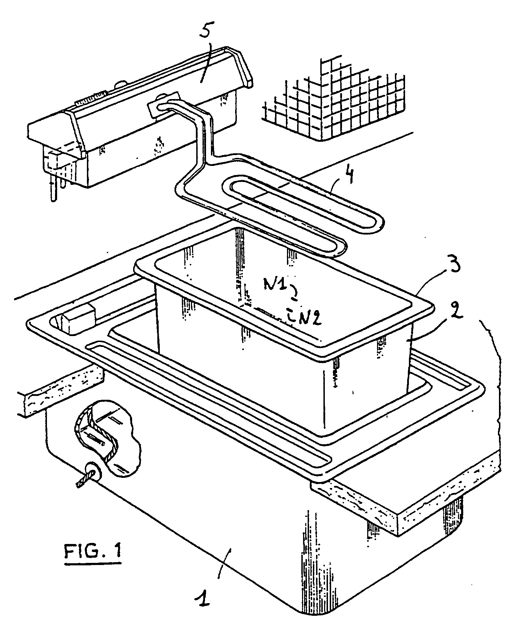

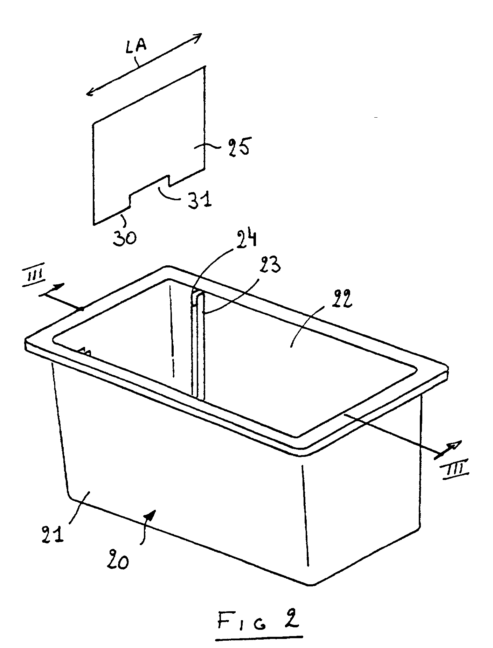

La figure 2 montre une cuve de cuisson 20 apte à remplacer la cuve 2 de la friteuse de la figure 1 pour obtenir une friteuse suivant l'invention. La cuve 20 porte sur deux parois latérales opposées 21,22 deux profilés en U 23 pour définir entre les ailes desdits profilés des gorges verticales de glissement 24. Une plaque 25 présente une largeur LA agencée pour que les bords latéraux 26 de la plaque coulissent dans les gorges 24 des profilés. Lorsque la plaque 25 est placée dans la cuve 20, cette plaque divise la cuve 20 en deux zones 27,28. Le bord supérieur 29 de la plaque 25 se situe en dessous du bord 3 de la cuve mais au-dessus du niveau N1, tandis que le bord inférieur 30 de la plaque 25 présente un arrachement situé en dessous du niveau N2. Ledit arrachement de la plaque forme un passage 31 entre la zone 27 et la zone 28. Avantageusement, la résistance 4 (représentée en traits interrompus) est située dans la zone 27. La paroi 25 divise ainsi la cuve en une zone active 27 (zone de cuisson) et une zone de contrôle 28. Lors de la cuisson d'aliments (par exemple contenus dans un panier) dans la zone 27, de la mousse ou une émulsion est formée au-dessus de la phase liquide. Au cas où le niveau de cette mousse venait à atteindre le niveau N3 du bord supérieur 29 de la plaque 25, de la mousse ou de l'émulsion passerait dans la zone 28 où cette mousse ou émulsion se transformera essentiellement sous forme de liquide. Cette formation de liquide dans la zone 28 provoquera un apport d'huile dans la zone 28 et dès lors un passage d'huile de la zone 28 vers la zone 27 par le passage 31.

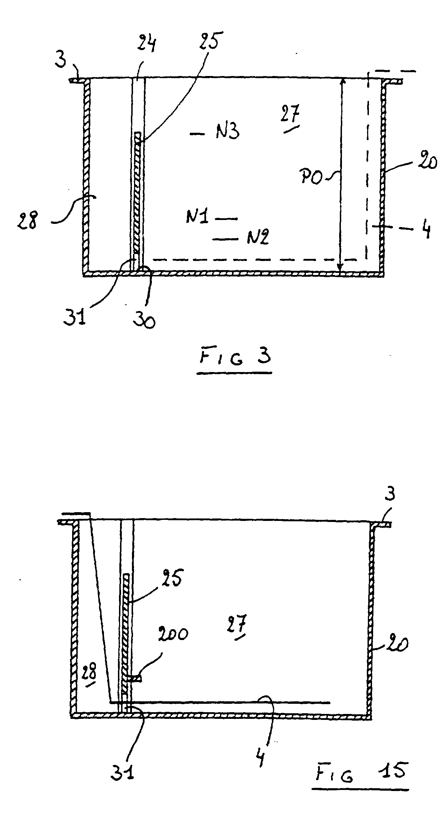

Etant donné que dans la forme de réalisation de la figure 3, la résistance 4 est placée dans la zone 27, l'huile contenue dans la zone 28 n'est chauffée sensiblement que par conduction de chaleur à travers la paroi 25. La zone 28, lors d'une cuisson normale d'aliments (avec non débordement de mousse ou d'émulsion au-dessus du bord 29), sera une zone calme ne participant sensiblement pas à la cuisson des aliments, zone dans laquelle pas ou sensiblement pas de vapeurs ne seront formées. Lors d'une cuisson normale sans débordement, la puissance calorifique de la résistance 4 ne servira sensiblement qu'à provoquer l'évaporation de l'eau contenue dans les aliments et qu'à réchauffer l'huile ou la graisse présente dans la zone 27. Au cas où un débordement de mousse ou d'émulsion de la zone 27 vers la zone 28 a lieu, le passage d'huile ou de graisse dans un état calme ou non agité (état sans formation de mousse) par le passage 31 vers la zone 27 permettra d'obtenir dans la zone 27 un bain contenant encore suffisamment d'huile ou de graisse pour la cuisson et un bain moins agité.

La figure 15 est une vue d'une friteuse similaire à celle représentée à la figure 3, si ce n'est que la résistance 4 s'étend à la fois dans la zone 27 et dans la zone 28. La résistance 4 passe de la zone 28 dans la zone 27 et vice versa via un passage ou un arrachement 31 que présente la paroi 25. La paroi 25 peut avantageusement être reliée, voire rendue solidaire de la résistance, de sorte que la paroi 25 sert alors d'appui pour la résistance assurant que cette dernière soit écartée du fond de la cuve 20. La paroi 25 peut également être munie d'un ou de doigts 200 destinés à servir de butée au panier lorsque ce dernier est abaissé dans la cuve.

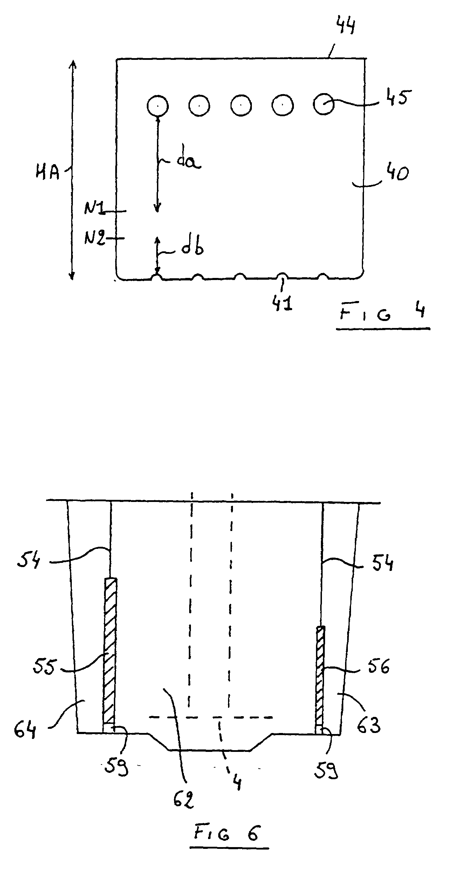

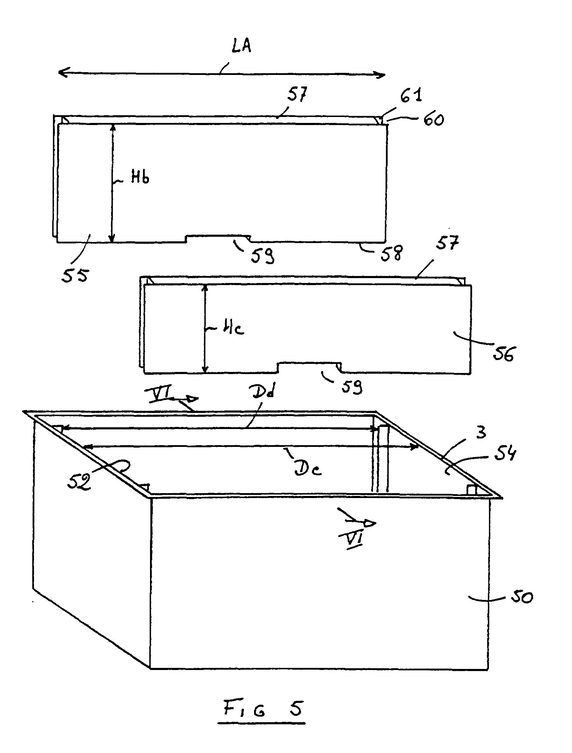

La figure 4 présente une plaque 40 qui peut avantageusement remplacer la plaque 25 de la figure 3. La plaque 40 présente une hauteur HA légèrement inférieure à la profondeur PO de la cuve, par exemple de 1 à 5 cm inférieure à ladite profondeur. La plaque 40 présente une série d'arrachements 41 le long de son bord inférieur 42 de manière à former entre le fond de la cuve et la paroi 40 une série de passages pour transférer de l'huile de la zone 28 vers la zone 27. La plaque 40 présente dans sa partie supérieure (partie adjacente du bord 44) une série d'orifices 45. Lorsque la plaque 40 est placée dans la cuve, les orifices 45 sont situés au-dessus du niveau N1, par exemple à une distance "da" du niveau N1 suffisante pour éviter le passage d'huile ou de graisse par les orifices 45 dû à une élévation de niveau de la phase liquide d'huile ou de graisse dans la cuve provoquée lors de l'abaissement du panier avec les aliments à cuire. Par exemple, la distance da est supérieure à 2 cm, en particulier supérieure à 5 cm. Lors du placement de la plaque 40 dans la cuve, les arrachements 41 s'étendent avantageusement en dessous du niveau minimal de liquide dans la cuve, par exemple à une distance "db" du niveau minimal qui soit suffisante pour éviter tout passage de vapeur de la zone 27 vers la zone 28 via les arrachements 41. La distance "db" est par exemple supérieure à 1 cm.

La figure 5 est une vue d'une autre cuve d'un appareil de cuisson suivant l'invention. La cuve 50 présente sur deux parois opposées 51,52 des rails 54. Des plaques rectangulaires 55,56 présentent chacune un bord supérieur droit 57, un bord inférieur 58 avec arrachement 59 et deux bords latéraux 60 présentant une gorge 61. La plaque a une longueur La correspondant sensiblement à la distance Dc séparant les parois 51, 52, la longueur La étant toutefois de préférence légèrement inférieure à ladite distance Dc. Les gorges 61 ont une forme épousant sensiblement la forme des rails 54. La distance Lb séparant le fond d'une gorge d'un bord latéral 60 d'une plaque au fond de la gorge de l'autre bord latéral 60 de ladite plaque est inférieure à la distance Dd séparant les extrémités des rails le long desquels les gorges coulissent.

Bien que la hauteur Hb,Hc des plaques peut être identiques, on a représenté à la figure 5 des plaques 55,56 de hauteur différente. Lorsque les plaques 55,56 sont placées dans la cuve, on crée dans la cuve trois zones, à savoir une première zone 62 située entre les plaques 55,56, une deuxième zone 63 située entre la paroi latérale de la cuve et la plaque 56, et une troisième zone 64 située entre la paroi latérale de la cuve et la plaque 55. Les zones 63 et 64 sont des zones dans lesquelles les aliments ne sont pas cuits et qui sont destinées à collecter de la mousse ou de l'émulsion produite dans la zone 62, lorsque la mousse ou émulsion atteint le niveau du bord supérieur 57 de la plaque 56 ou le niveau du bord supérieur 57 de la plaque 55.

Les bords inférieurs et l'arrachement 59 des plaques 55,56 sont agencés dans la cuve de manière à éviter tout passage de vapeurs d'eau de la zone 62 par les arrachements 59 vers les zones 63,64. De plus, vu que les gorges des bords latéraux épousent la forme des rails, il est possible d'éviter tout passage de vapeur ou d'émulsion ou de mousse de la zone 62 vers la zone 63 en dessous du niveau supérieur de la plaque 56 et vers la zone 64 en dessous du niveau du bord supérieur de la plaque 55.

La résistance chauffante 4 représentée en traits interrompus est avantageusement une résistance située dans la zone 62 au voisinage du fond de la cuve. Lorsque le fond de la cuve comporte du côté extérieur de la cuve un élément chauffant, cet élément chauffant se situe avantageusement dans la partie du fond située sous la partie 62.

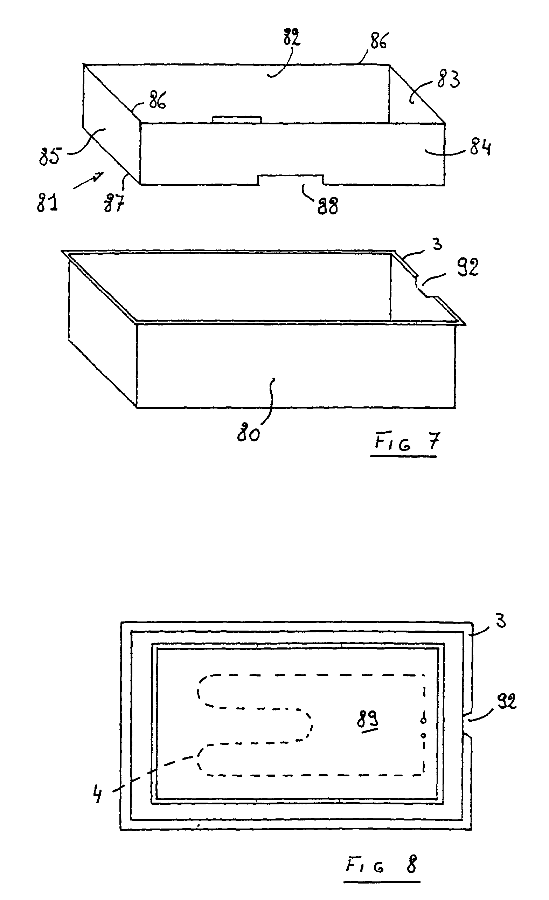

La figure 7 montre encore une autre forme de réalisation d'une cuve d'un appareil de cuisson. Dans cette forme de réalisation, on insère dans la cuve 80 un cadre ou enveloppe 81 formé de quatre parois 82,83,84,85 sensiblement verticales reliées entre elles. Les parois présentent un bord supérieur 86 et un bord inférieur 87 destiné à prendre appui sur le fond de la cuve. Les parois 82 et 84 présentent le long de leur bord inférieur un arrachement 88 destiné à former un passage pour de l'huile ou de la graisse liquide, tout en formant une barrière au passage de vapeurs, de mousse ou d'émulsion.

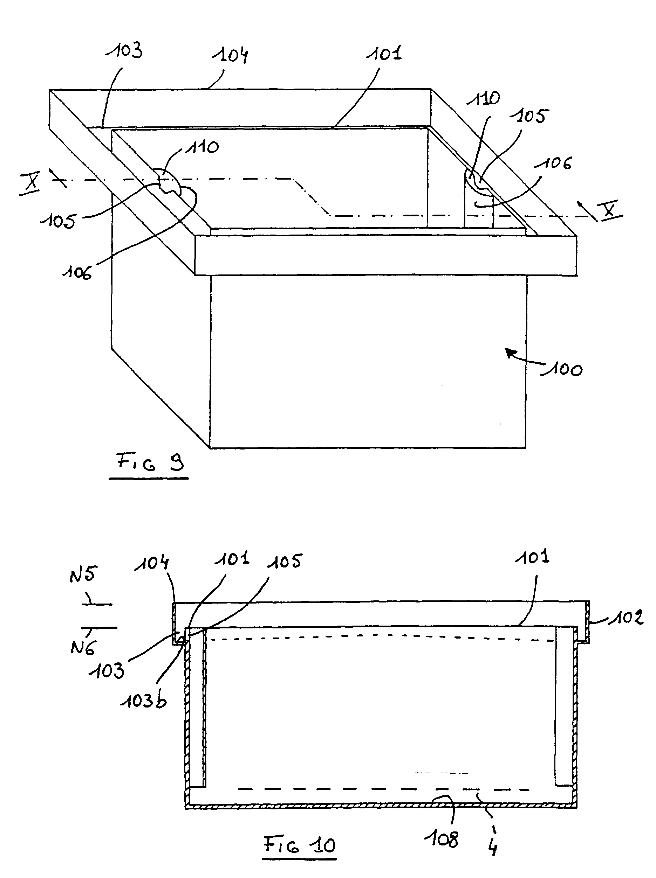

Lorsque le cadre 81 est placé dans la cuve 80, on forme une première zone 89 centrale dans laquelle les aliments sont fris , et une deuxième zone 90 située entre les parois latérales de la cuve 80 et les parois du cadre, ladite deuxième zone étant destiné à recevoir de la mousse ou émulsion d'huile ou de graisse lorsque le niveau de mousse ou d'émulsion dépasse un niveau prédéterminé et défini par le niveau des bords supérieurs 86 des parois. Ce niveau prédéterminé est par exemple choisi pour ne permettre le transvasement de mousse ou d'émulsion qu'en cas de cuisson anormale. Par exemple, le niveau des bords supérieurs 86 est situé de 3 à 6 cm en dessus du niveau du bord supérieur de la cuve ou de l'encoche 92 éventuellement prévue dans la cuve pour recevoir un élément amovible portant le panier ou la résistance électrique 4. La résistance électrique 4 est avantageusement plongée dans le bain d'huile ou de graisse de la zone 89. (voir figure 8)

La figure 9 présente encore une autre forme de réalisation d'une cuve de cuisson. Cette cuve 100 comporte le long de son bord supérieur 101 un profilé en L 102 de manière à définir le long dudit bord supérieur 101 un canal de réception 103. Le bord extérieur 104 du profilé 102 se trouve à un niveau N5 supérieur au niveau N6 du bord 101. Deux découpes 105 sont façonnées en dessous du bord 101 de manière à former des passages. La cuve 100 présente également deux conduits 106 s'étendant chacun depuis une ouverture inférieure 107 adjacente du fond 108 de la cuve jusqu'à une ouverture supérieure 109 s'étendant à un niveau adjacent du niveau N6 du bord supérieur 101. Chaque découpe 105 forme ainsi un passage entre le canal 103 et l'espace intérieur 110 d'un conduit 106.
Lors d'une cuisson où une quantité excessive de mousse ou d'émulsion est produite, dès que le niveau de mousse u d'émulsion dépasse le niveau N6, de la mousse ou de l'émulsion déborde au-dessus du bord supérieur 101 pour pénétrer dans le canal 103. Dans le canal 103, ladite mousse ou émulsion se transforme en une phase liquide et coule vers les découpes 105 avant de pénétrer dans les conduits 106. Les conduits 106 guident alors la mousse ou émulsion transformée en liquide vers la phase liquide du bain liquide de la cuve. Les conduits 106 permettent d'éviter tout passage de mousse ou d'émulsion dans ceux-ci, tant que le niveau de mousse ou d'émulsion n'a pas dépassé le niveau N6.
Pour favoriser l'écoulement d'huile ou de graisse dans le canal 103 vers les découpes 105, il peut être utile de prévoir que le fond 103b du canal 103 présente au moins partiellement une pente.
La résistance chauffante 4 montrée en traits interrompus est avantageusement une résistance plongeant dans la cuve 100.

La figure 11 montre en perspective un panier suivant l'invention. Ce panier 120 comporte une poignée 123, un fond ajouré 121 et des parois latérales 122 réalisées au moyen d'une tôle pleine ondulée Ces parois 122 présentent un bord inférieur 124 adjacent du fond ajouré 121 et un bord supérieur 125. La hauteur de la tôle 122 est par exemple comprise entre 3 et 10 cm. Avantageusement, lorsque le panier est abaissé dans la cuve 2, le bord inférieur 124 est agencé pour plonger dans la phase liquide du bain de cuisson, à un niveau correspondant au niveau N9 du fond 121 du panier ou en dessous dudit niveau. De préférence, le bord inférieur 124 est en dessous du niveau minimal N2 d'huile ou de graisse dans la cuve 2, tandis que le bord supérieur 125 est agencé pour s'étendre au-dessus du niveau maximal d'huile N1 dans la cuve 2, par exemple à une distance dudit niveau N1 correspondant à la hauteur maximale autorisée de mousse ou d'émulsion dans la cuve 2.

La tôle 122 divise ainsi le bain de cuisson et la cuve en deux zones, à savoir une zone de cuisson 126 correspondant au volume intérieur du panier, et une zone 127 s'étendant entre la tôle 122 et les parois latérales de la cuve 2.
La zone 127 est une zone peu agitée qui ne reçoit sensiblement pas de mousse ou d'émulsion de cuisson passant en dessous du bord inférieur 124 de la tôle 122. Ainsi, lorsque le niveau de mousse ou d'émulsion dépasse le niveau du bord supérieur 125 de la tôle 122, de la mousse ou de l'émulsion passe au-dessus du bord 125 pour tomber dans la zone 127, où cette mousse ou émulsion se transforme en une phase liquide. Lors du passage de mousse ou d'émulsion au-dessus du bord 125, de l'huile ou de la graisse passe en dessous du bord 124 de la tôle de la zone 127 vers la zone 126.
La tôle 122 est avantageusement ondulée de manière à limiter le contact des aliments avec ladite tôle et pour former des canaux 128 sensiblement verticaux assurant une bonne circulation d'huile ou de graisse liquide autour des aliments présents dans le panier, en particulier le long de la face de la tôle tournée vers l'intérieur du panier (126). Cette circulation est obtenue essentiellement par convection.

Pour assurer un espace suffisant entre le fond ajouré 121 du panier 120 et le fond de la cuve 2, les parois 122 peuvent présenter des prolongements 129 formant des pattes prenant appui sur le fond de la cuve. De telles pattes 129 sont représentées en traits interrompus sur la figure 11. Ces pattes s'étendent par exemple aux quatre coins inférieurs du panier.

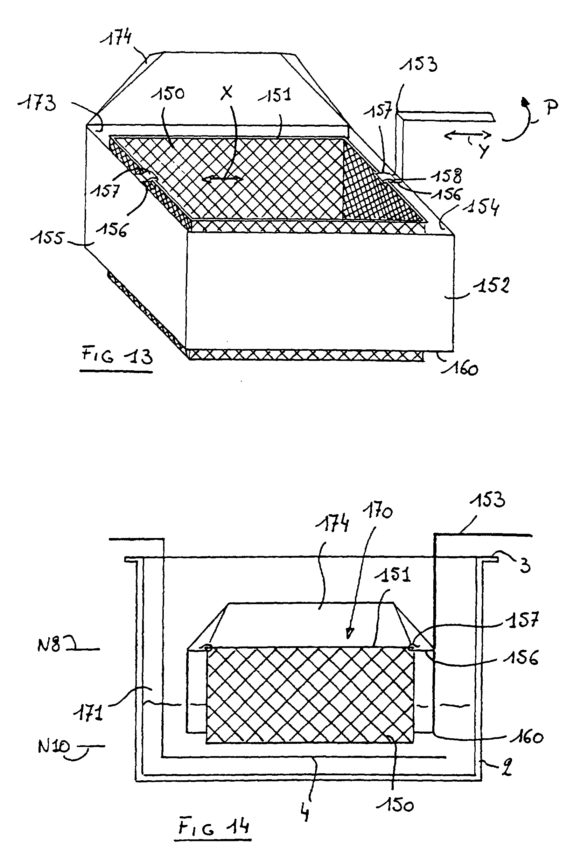

La figure 13 montre une autre forme de réalisation d'un panier suivant l'invention. Le panier comporte un élément 150 destiné à contenir les aliments à cuire et réalisé au moyen d'un treillis porté par une tige 151 pliée formant le bord supérieur dudit élément. Un cadre 152 réalisé au moyen d'une tôle pleine pliée est associé à une poignée 153. Le cadre 152 porte sur deux parois opposées 154,155 deux pattes 156 tournées l'une vers l'autre et présentant une partie 157 recourbée vers le haut. La partie 157 présente une extrémité libre 158 avantageusement non attachée au cadre. L'élément 150 présente dans sa partie réalisée au moyen dudit treillis et en dessous de la tige 151, deux fenêtres 159 destinées chacune à livrer passage à une patte 156 du cadre 152. En fait, la partie de la tige 151 située au-dessus de la fenêtre 159 prend appui sur la patte 156, la partie recourbée 157 servant de moyen de fixation (du type clip par exemple) empêchant un détachement non désiré de l'élément des pattes (c'est-à-dire le déplacement de la partie de la tige hors de la partie courbée de la patte). Avantageusement, la forme des parties recourbées des pattes permet un léger déplacement relatif X de la tige et donc de l'élément ajouré 150 par rapport au cadre 152. Ceci permet ainsi lors du secouement du panier via la poignée 153 dans le sens Y d'assurer un mouvement relatif X de l'élément par rapport au cadre 152 et donc un meilleur égouttage de l'huile ou de la graisse présente sur les aliments cuits.

Lorsque le panier est plongé dans la cuve 2, le bord inférieur 160 du cadre 152 est plongé dans la phase liquide du bain d'huile ou de graisse, tandis que le bord supérieur 161 s'étend au-dessus du niveau de la phase liquide, par exemple au niveau maximum de mousse ou d'émulsion considéré comme admissible pour la cuve 2.

Lorsque le niveau de mousse ou d'émulsion dans la zone 170 située à l'intérieur du cadre dépasse un niveau N8 considéré comme admissible (niveau du bord supérieur 161 du cadre), de la mousse ou émulsion passe dans la zone peu agitée 171 située entre le cadre 152 et les parois latérales de la cuve 2. Cette mousse ou émulsion se transforme alors en une phase liquide et de l'huile ou de la graisse de la zone 171 passe sous le bord inférieur 160 du cadre pour entrer dans la zone 170.

Etant donné que le cadre 152 est distant de l'élément ajouré 150, la convection d'huile est assurée entre l'élément et les parois 152 lorsque le panier est en position abaissée. Le bord inférieur 160 peut se situer au-dessus du niveau N10 du fond de l'élément 150. De façon avantageuse, le bord inférieur 160 du cadre du panier abaissé dans la cuve se situe en dessous du niveau minimal d'huile ou de graisse requis pour la cuve (N1). Le niveau maximal auquel s'étend ou peut s'étendre le bord inférieur sera choisi pour éviter tout passage de vapeur ou de mousse de la zone de cuisson (170) sous le bord inférieur 160 du cadre 152 vers la zone 171, ce niveau maximal sera d'autant plus haut que les parois 152 sont écartées de l'élément 150.

Avantageusement on peut associer une paroi 173 du cadre 152, de préférence une paroi sensiblement parallèle à la direction Y dans laquelle s'étend la poignée 153, à un prolongement 174 destiné à guider les aliments cuits hors de l'élément 150 vers un récipient ou un plat (par exemple lors d'un basculement ou d'un pivotement P de l'élément 150 par rapport à un axe parallèle à la direction Y ou à la poignée).

Dans les appareils de cuisson suivant l'invention, la hauteur de la ou des parois de séparation (25,56,57,86,106,122,152), en particulier le niveau auquel s'étend le bord supérieur de celle-ci au-dessus duquel un débordement de mousse ou d'émulsion est possible ou le niveau des orifices de passages par débordement de mousse ou d'émulsion, ainsi que le volume de la chambre de réception, dépendent du débit de mousse, émulsion qui doit être absorbé par la chambre de réception lors d'une cuisson anormale pour assurer que le niveau de mousse ou émulsion dans la cuve reste en dessous d'un niveau maximal de mousse admissible dans la cuve, par exemple lors d'une cuisson d'une quantité excessive d'aliments. Le débit de mousse ou d'émulsion produit dans la zone de cuisson et apte à déborder est variable pour chaque appareil. Ce débit sera fonction du volume de la cuve, de la quantité d'huile ou de graisse présente dans la cuve, de la quantité d'aliments pouvant être traitée lors d'un cycle de cuisson, de la puissance thermique de la résistance chauffante, de la température de l'air au-dessus de la mousse ou émulsion, de la température des parois de la cuve et des parois de séparation, du matériau utilisé, etc. Le débit de mousse ou émulsion apte à passer de la zone de cuisson vers la zone peu agitée sera d'autant moindre que la quantité de mousse ou émulsion se transformant en liquide dans la zone de cuisson est importante. Lors d'une cuisson normale, il est possible d'avoir un auto-contrôle de la mousse dans la zone de cuisson (pas ou peu de débit de mousse débordant de la zone de cuisson vers la zone peu agitée) par la température du bain de cuisson, par la température de l'air au-dessus de la mousse ou de l'émulsion, par la température des parois de la cuve et par la température de la paroi de séparation, par le choix d'un matériau de plus faible conductivité thermique (des parois latérales en inox s'avèrent meilleure que des parois en aluminium pour favoriser un auto-contrôle).

Dès lors, la hauteur ou niveau du bord supérieur ou des passages de débordement des parois de séparation dans la cuve est avantageusement pas trop bas pour éviter qu'une quantité de mousse ou d'émulsion auto-contrôlable produite lors d'une cuisson normale ne passe par débordement dans la zone peu agitée, et pour éviter un risque éventuel de saturation de la zone peu agitée par de la mousse ou émulsion provenant de la zone de cuisson. Ladite hauteur ou niveau du bord supérieur, voire la section de passages des orifices (45) seront dès lors de façon avantageuse déterminés pour limiter, de préférence éviter, tout passage de mousse ou d'émulsion dans la zone peu agitée pour une cuisson normale, c'est-à-dire pour limiter, voire éviter tout passage de mousse ou d'émulsion qui pourrait être auto-contrôlée de par la hauteur des parois de la cuve, de la température des parois, de la température de l'air situé au-dessus de la mousse ou émulsion.

Il est clair que de nombreuses modifications sont possibles dans les formes de réalisation représentées dans les dessins.

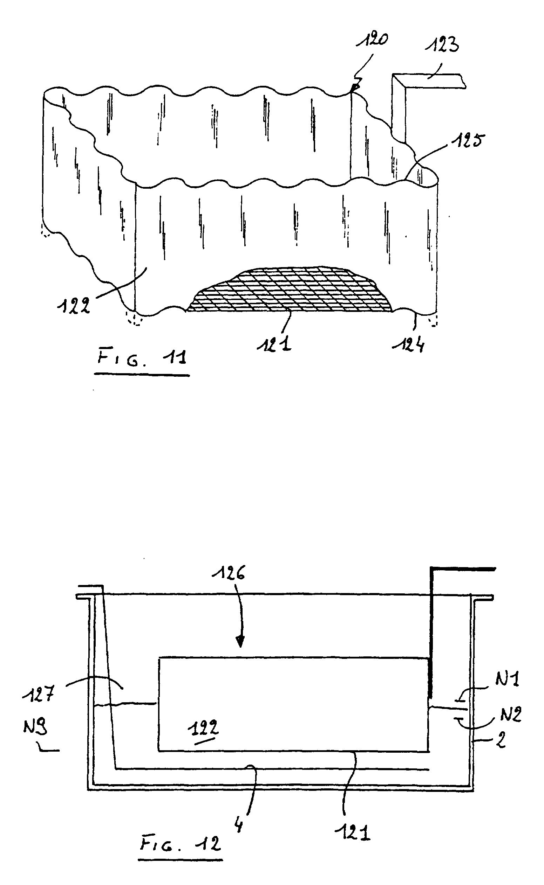

Ainsi, par exemple, l'appareil de cuisson peut n'être constitué que d'une cuve de cuisson telle que représentée aux figures 2 à 13, cuve destinée à être placée sur un élément chauffant, par exemple sur une plaque électrique ou une plaque de chauffage au gaz. Naturellement, l'appareil suivant l'invention comporte de préférence un système de chauffage tel une résistance électrique. Cette dernière est de préférence une résistance plongeant dans le bain de cuisson, résistance se trouvant dans la zone de cuisson (126) et/ou dans la zone peu agitée (127), de préférence sensiblement uniquement dans la zone de cuisson. Toutefois il est possible d'utiliser des cuves dont le fond est associé ou porte une résistance chauffante du côté extérieur de la cuve.

L'appareil suivant l'invention peut comporter un couvercle, un couvercle filtrant, un système d'aspiration de fumées, un système de traitement de fumées, un système de condensation des fumées, un panier commandé, un panier avec poignée multi fonctionnelle, un système d'abaissement et/ou de montée automatique du panier, etc.

Les parois de séparation au lieu d'être verticales ou sensiblement verticales peuvent être inclinées. Par exemple, elle peuvent présenter une inclinaison telle que son bord inférieur soit plus adjacent d'une paroi latérale que ne l'est son bord supérieur.

L'appareil de cuisson suivant l'invention permet de frire des aliments divers (frites, croquettes, viande panée, etc.), mais permet également la cuisson de liquide ou suspension (lait, jus de fruits, confiture) formant une mousse ou écume lors de la cuisson.

## Revendications

1. Appareil de cuisson ou de traitement thermique par immersion, domestique ou semi-industriel comprenant une cuve de cuisson (20,50,80,100) destinée à contenir un liquide de cuisson pour la cuisson d'un aliment formant au-dessus du niveau supérieur d'une phase ou bain liquide, une mousse ou une écume ou une émulsion lors de la cuisson ou au moins lors d'une partie de celle-ci, ladite cuve présentant un fond, une ou des parois latérales, et un bord extrême supérieur, ladite cuve présentant une marque (N1) correspondant au niveau maximal de liquide de cuisson dans 1a cuve et étant associée à un moyen définissant dans la cuve une zone de cuisson d'aliments et une zone de non cuisson d'aliments, ainsi qu'un passage entre la zone de cuisson et la zone de non cuisson situé en dessous du niveau maximal (N1) de liquide de cuisson dans la cuve, **caractérisé en ce qu'**il comporte ou est associé à un moyen (25; 40, 55, 56, 81, 101,106,120, 122b,152) définissant une zone de non cuisson dans la cuve et permettant le passage de mousse, d'écume ou d'émulsion de la zone de cuisson dans la zone de non cuisson lorsque ladite mousse, écume ou émulsion atteint un niveau supérieur à un niveau prédéterminé (N3; 57; 86; N6; 125; 161) dans la cuve qui se trouve au moins 2 centimètres, de préférence au moins 5 centimètres au dessus du niveau maximal (N1) de liquide de cuisson dans la cuve, ladite mousse ou écume ou émulsion étant transformée en liquide dans la zone de non cuisson (28; 63,64; 90; 103,110; 127; 171), ledit moyen (25;56,57; 81; 106; 122b; 152) empêchant sensiblement tout passage d'écume, de mousse ou d'émulsion dans ladite zone de non cuisson (28; 63,64; 90; 103,110; 127; 171) à un niveau situé en dessous dudit niveau prédéterminé (N3; 57; 86; N6; 125; 161), et **en ce qu'**il comporte un moyen guidant ledit liquide provenant de la transformation de ladite mousse ou écume ou émulsion dans la cuve jusqu'à un niveau (31;59; 88; 107; 124;160) situé en dessous du niveau maximum (N1) de liquide de cuisson de la cuve.

2. Appareil suivant la revendication 1, **caractérisé en ce que** ledit moyen définissant une zone de non cuisson dans la cuve et permettant le passage de mousse, d'écume ou d'émulsion de la zone de cuisson dans la zone de non cuisson comporte une paroi (25;56,57; 81; 106; 122b; 152) présentant au moins un orifice (45) situé en dessous du bord extrême (3) de la cuve pour permettre le passage de mousse, d'écume ou d'émulsion par ledit orifice (45) dans la zone de non cuisson lorsque ladite mousse, écume ou émulsion atteint un niveau prédéterminé correspondant au niveau dudit orifice (45) dans la cuve et/ou présentant un bord supérieur (29; 57; 86; 101; 125; 161) au moins partiellement situé en dessous du bord extrême (3,104) de la cuve pour permettre le passage par débordement au-dessus d'au moins une partie dudit bord supérieur (29; 57; 86; 101; 125; 161) de mousse, d'écume ou d'émulsion dans la zone de non cuisson lorsque ladite mousse, écume ou émulsion atteint un niveau supérieur audit niveau prédéterminé (N3; 57; 86; N6; 125; 161) dans la cuve, et **en ce que** ladite paroi est agencée dans la cuve pour empêcher sensiblement tout passage d'écume, de mousse ou d'émulsion dans la zone de non cuisson en dessous dudit niveau prédéterminé (N3; 57; 86; N6; 125; 161).

3. Appareil suivant 1a revendication 1 ou 2, **caractérisé en ce que** la zone de non cuisson présente un volume au moins égal à 2% du volume de la cuve.

4. Appareil suivant l'une quelconque des revendications précédentes, **caractérisé en ce qu'**il comporte une ou plusieurs parois de séparation (25;56,57; 81; 106; 122b; 152) s'étendant dans la cuve le long d'une ou de parois latérales de celle-ci, de manière à définir entre ladite ou lesdites parois de séparation et ladite ou lesdites parois latérales de 1a cuve, une ou plusieurs zones de non cuisson pour réceptionner (28; 63,64; 90; 103,110; 127; 171) de la mousse, de l'écume ou de l'émulsion de la zone de cuisson, ladite ou lesdites parois de séparation (25;56,57; 81; 106; 122b; 152) présentant, d'une part,
- au moins un orifice (45) situé en dessous du bord extrême de la cuve, mais au dessus dudit niveau prédéterminé pour permettre le passage de mousse, d'écume ou d'émulsion par ledit orifice (45) dans la chambre de réception lorsque ladite mousse, écume ou émulsion atteint un niveau supérieur audit niveau prédéterminé dans la cuve et/ou présentant un bord supérieur (29; 57; 86; 101; 125; 161) au moins partiellement situé en dessous du bord extrême de la cuve, mais au dessus dudit niveau prédéterminé (N3; 57; 86; N6; 125; 161) pour permettre le passage par débordement au-dessus d'au moins une partie dudit bord supérieur (29; 57; 86; 101; 125; 161) de mousse, d'écume ou d'émulsion dans la chambre de réception lorsque ladite mousse, écume ou émulsion atteint un niveau supérieur audit niveau prédéterminé (N3; 57; 86; N6; 125; 161) dans la cuve, et, d'autre part,
- un passage (31,41,88,107) situé sous le niveau minimal (N2) de phase liquide dans la cuve et/ou un bord (124,160) définissant avec le fond et/ou une paroi latérale un passage situé sous le niveau minimal (N2) de la phase liquide dans la cuve, et
**en ce que** la ou les parois (25;56,57; 81; 106; 122b; 152) sont agencées dans la cuve pour empêcher sensiblement tout passage d'écume, de mousse ou d'émulsion dans la ou les zones de non cuisson en dessous dudit niveau prédéterminé (N3; 45 ; 57; 86; N6; 125; 161).

5. Appareil de cuisson suivant l'une quelconque des revendications précédentes, ledit appareil comprenant au moins un panier destiné à contenir les aliments à cuire, ledit panier étant abaissé dans la cuve pour la cuisson des aliments, **caractérisé en ce que** le panier porte au moins une ou des parois (122;152) de séparation agencées de manière à définir lorsque le panier est abaissé dans la cuve, entre ladite ou lesdites parois du panier et une ou des parois latérales de la cuve, une ou plusieurs chambres de réception (127;171) de mousse, d'écume ou d'émulsion, ladite ou lesdites parois (122;152) du panier en position abaissée présentant, d'une part,
- au moins un orifice situé en dessous du bord extrême de la cuve pour permettre 1e passage de mousse, d'écume ou d'émulsion par ledit orifice dans la chambre de réception lorsque ladite mousse, écume ou émulsion atteint un niveau supérieur audit niveau prédéterminé (N8; 125; 161) dans 1a cuve et/ou présentant un bord supérieur (125;161) au moins partiellement situé en dessous du bord extrême de la cuve mais supérieur d'au moins 2 centimètres, de préférence d'au moins 5 centimètres du niveau maximal (N1) de liquide de cuisson dans la cuve pour permettre le passage par débordement au-dessus d'au moins une partie dudit bord supérieur (125,161) de mousse, d'écume ou d'émulsion dans la chambre de réception (127;171) lorsque ladite mousse, écume ou émulsion atteint un niveau supérieur audit niveau prédéterminé (N8,125,161) dans la cuve, et, d'autre part,
- un passage situé sous le niveau minimal (N2) de la phase liquide lorsque le panier est en position abaissée dans la cuve et/ou un bord (124,160) définissant avec le fond et/ou une paroi latérale un passage situé sous le niveau minimal (N2) de la phase liquide lorsque le panier est en position abaissée dans la cuve, et
**en ce que** la ou les parois (122;152) du panier en position abaissée sont agencées dans la cuve pour empêcher sensiblement tout passage d'écume, de mousse ou d'émulsion dans la ou les chambres de réception (127;171) en dessous dudit niveau prédéterminé (N8,125,161).

6. Appareil de cuisson suivant la revendication 5, **caractérisé en ce que** 1e panier est un panier ajouré présentant un fond, une ou des faces latérales et un bord supérieur, ledit panier portant le long de sa ou de ses faces latérales une ou des parois de séparation (122,152), dont le bord inférieur (124,160) est agencé pour s'étendre sous le niveau minimal (N2) de la phase liquide lorsque le panier est abaissé dans la cuve et dont le bord supérieur (125,161) est agencé pour s'étendre au moins 2 centimètres, de préférence au moins 5 centimètres au dessus du niveau maximal (N1) de liquide de cuisson dans la cuve lorsque le panier est en position abaissée dans la cuve, **en ce que** la chambre de réception (127,171) est définie entre la ou les parois de séparation (122,152) du panier et la ou les parois latérales de la cuve, et **en ce que** la ou les parois de séparation (122,152) du panier en position abaissée dans la cuve sont agencées pour empêcher sensiblement tout passage d'écume, de mousse ou d'émulsion dans la chambre de réception (127,171) en dessous du niveau du bord supérieur (125,161) de la ou des parois de séparation du panier en position abaissée du panier.

7. Appareil de cuisson suivant la revendication 6, **caractérisé en ce que** la ou les parois de séparation (152) portées par le panier ajouré (150) sont distantes des parois latérales de celui-ci, et avantageusement situées à l'extérieur du panier de manière à former une enveloppe ou cadre (152) autour du panier ajouré (150).

8. Appareil de cuisson suivant la revendication 6, **caractérisé en ce que** la ou les parois latérales du panier sont constituées d'une paroi pleine dont le bord inférieur (124) est agencé pour empêcher lorsque le panier est en position abaissée dans la cuve, sensiblement tout passage d'écume, de mousse ou d'émulsion dans la chambre de réception en dessous du niveau du bord supérieur (125) de la paroi du panier.

9. Appareil de cuisson suivant la revendication 7 ou 8, **caractérisé en ce que** ladite paroi (122b) présente une ondulation ou des plis formant une série de canaux sensiblement verticaux lorsque le panier est en position abaissée dans la cuve.

10. Appareil de cuisson suivant l'une quelconque des revendications 6 à 9, **caractérisé en ce que** la ou les parois de séparation et les parties ajourées du panier sont réalisées en des matériaux présentant sensiblement un même coefficient de dilatation.

11. Appareil suivant l'une quelconque des revendications 1 à 5, **caractérisé en ce que** 1a cuve présente des gorges (24) dans lesquelles coulissent les bords latéraux d'une paroi de séparation (25;40) ou des rails (54) le long desquels coulissent des gorges (61) que présentent les bords latéraux d'une paroi de séparation (55,56).

12. Appareil suivant la revendication 11, **caractérisé en ce que** la paroi de séparation est réalisée en un matériau présentant un coefficient de dilatation thermique au plus égal au coefficient de dilatation thermique de la cuve ou de la partie de la cuve située entre lesdits rails.

13. Appareil suivant la revendication 11 ou 12, **caractérisé en ce que** les gorges ou les rails (24,54) s'étendent chacun le long d'une paroi latérale de la cuve sur une hauteur allant d'un niveau situé sous le niveau minimal de liquide dans la cuve (N2) à un niveau situé au-dessus du niveau maximal (N1) de liquide dans la cuve, avantageusement à un niveau proche du niveau prédéterminé à partir duquel une mousse, une écume ou une émulsion passe dans la chambre de réception de la mousse, écume ou émulsion provenant de la zone de cuisson.

14. Appareil de cuisson suivant l'une quelconque des revendications 1 à 5, **caractérisé en ce que** la ou les parois de séparation forment un cadre (81) sensiblement circulaire, rectangulaire ou carré prenant appui sur le fond de la cuve et/ou porté par une ou des parois latérales de la cuve.

15. Appareil de cuisson suivant l'une quelconque des revendications précédentes, **caractérisé en ce qu'**il comporte une résistance électrique placée sous ou associée au fond de la cuve et/ou une résistance électrique (4) placée dans la cuve.

16. Appareil de cuisson suivant l'une quelconque des revendications précédentes, **caractérisé en que** ledit appareil est une friteuse, ladite friteuse comportant de préférence un panier avantageusement avec poignée multi fonctionnelle et/ou un couvercle et/ou un système de filtration.

17. Procédé de cuisson d'aliments dans un bain d'huile et/ou de graisse liquide au moyen d'une friteuse suivant la revendication 16, dans lequel on divise le bain au moyen d'une paroi en une zone de cuisson dans laquelle le bain liquide est en contact avec la résistance électrique ou avec 1a paroi associée à la résistance électrique et en une zone de non cuisson chauffée essentiellement par transfert de chaleur de l'huile de la zone de cuisson vers la zone de non cuisson, et dans lequel on cuit les aliments dans la zone de cuisson de manière à ce qu'uniquement en cas de formation de mousse ou d'émulsion au-dessus d'un niveau prédéterminé, de la mousse ou de l'émulsion passe dans la zone de non cuisson où elle se transforme sous forme d'huile ou de graisse liquide, de l'huile ou de la graisse de la zone de non cuisson passant alors dans la zone de cuisson.

## Patentansprüche

1. Vorrichtung zum Kochen oder zur thermischen Behandlung durch Eintauchen für den Haushalt oder den halbindustriellen Einsatz mit einem Kochbehälter (20, 50, 80, 100), der dazu bestimmt ist, eine Kochflüssigkeit für das Kochen eines Nahrungsmittels zu enthalten, die oberhalb des oberen Niveaus einer flüssigen Phase oder eines flüssigen Bades während des Kochens oder zumindest während eines Teils davon einen Schaum oder einen Abschaum oder eine Emulsion bildet, wobei der Behälter einen Boden, eine oder mehrere Seitenwände und einen oberen Außenrand aufweist, wobei der Behälter eine Markierung (N1) aufweist, die dem maximalen Niveau der Kochflüssigkeit in dem Behälter entspricht und einem Mittel zugeordnet ist, das in dem Behälter eine Kochzone für Nahrungsmittel und eine Nicht-Kochzone für Nahrungsmittel sowie einen Durchlaß zwischen der Kochzone und der Nicht-Kochzone, der unterhalb des maximalen Niveaus (N1) der Kochflüssigkeit in dem Behälter gelegen ist, definiert, **dadurch gekennzeichnet, daß** sie ein Mittel (25; 40, 55, 56, 81, 101, 106, 120, 122b, 152) aufweist, das eine Nicht-Kochzone in dem Behälter definiert und den Durchlaß von Schaum, Abschaum oder Emulsion von der Kochzone in die Nicht-Kochzone erlaubt, wenn der Schaum, Abschaum oder die Emulsion ein Niveau deshalb eines vorgegebenen Niveaus (N3; 57; 86; N6; 125; 161) in dem Behälter erreicht, das sich wenigstens 2 cm, vorzugsweise wenigstens 5 cm oberhalb des maximalen Niveaus (N1) der Kochflüssigkeit in dem Behälter befindet, wobei der Schaum oder Abschaum oder die Emulsion in der Nicht-Kochzone (28; 63, 64; 90; 103, 110; 127; 171) in Flüssigkeit umgewandelt wird, wobei das Mittel (25; 56, 57; 81; 106; 122b; 152) im wesentlichen den Durchlaß von Schaum, Abschaum oder Emulsion in die Nicht-Kochzone (28; 63, 64; 90; 103, 110; 127; 171) auf einem Niveau, welches unterhalb des vorgegebenen Niveaus (N3; 57; 86; N6; 125; 161) liegt, verhindert, und daß sie ein Mittel aufweist, welches die Flüssigkeit, welche aus der Umwandlung des Schaums oder Abschaums oder der Emulsion hervorgeht, in den Behälter bis zu einem Niveau (31; 59; 88; 107; 124; 160), das unterhalb des maximalen Niveaus (N1) der Kochflüssigkeit in dem Behälter liegt, führt.

2. Vorrichtung nach dem Anspruch 1, **dadurch gekennzeichnet, daß** das Mittel, welches eine Nicht-Kochzone in dem Behälter definiert und den Durchlaß von Schaum, Abschaum oder Emulsion von der Kochzone in die Nicht-Kochzone erlaubt, eine Wand (25; 56, 57; 81; 106; 122b; 152) aufweist, die wenigstens eine Öffnung (45) besitzt, welche unterhalb des Außenrandes (3) des Behälters vorgesehen ist, um den Durchlaß von Schaum, Abschaum oder Emulsion durch die Öffnung (45) in die Nicht-Kochzone zu erlauben, wenn der Schaum, der Abschaum oder die Emulsion ein vorgegebenes Niveau erreicht, das dem Niveau der Öffnung (45) in dem Behälter entspricht, und/oder eine obere Kante (29; 57; 86; 101; 125; 161) aufweist, die wenigstens teilweise unterhalb des Außenrandes (3, 104) des Behälters vorgesehen ist, um den Durchlaß von Schaum, Abschaum oder Emulsion in die Nicht-Kochzone durch Überlauf über wenigstens einen Teil des oberen Randes (29; 57; 86; 101; 125; 161) zu erlauben, wenn der Schaum, der Abschaum oder die Emulsion ein Niveau oberhalb des vorgegebenen Niveaus (N3; 57; 86; N6; 125; 161) in dem Behälter erreicht, und daß die Wandung in dem Behälter angeordnet ist, um im wesentlichen den Durchlaß von Schaum, Abschaum oder Emulsion in die Nicht-Kochzone unterhalb des vorgegebenen Niveaus (N3; 57; 86; N6; 125; 161) zu verhindern.

3. Vorrichtung nach dem Anspruch 1 oder 2, **dadurch gekennzeichnet, daß** die Nicht-Kochzone ein Volumen von wenigstens 2 % des Volumens des Behälters aufweist.

4. Vorrichtung nach einem der vorherigen Ansprüche, **dadurch gekennzeichnet, daß** sie eine oder mehrere Trennwände (25; 56, 57; 81; 106; 122b; 152) aufweist, die sich in dem Behälter entlang einer der Seitenwände von diesem in einer solchen Weise erstreckt bzw. erstrecken, daß zwischen der Trennwand oder den Trennwänden und der Seitenwand oder den Seitenwänden des Behälters eine oder mehrere Nicht-Kochzonen (28; 63, 64; 90; 103, 110; 127; 171) zur Aufnahme des Schaums, des Abschaums oder der Emulsion von der Kochzone definiert bzw. definieren, wobei die Trennwand oder die Trennwände (25; 56, 57; 81; 106; 122b; 152) einerseits
- wenigstens eine Öffnung (45) aufweisen, die unterhalb des Außenrandes des Behälters aber oberhalb des vorgegebenen Niveaus plaziert ist, um den Durchlaß von Schaum, Abschaum oder Emulsion durch die Öffnung (25) in die Aufnahmekammer zu erlauben, wenn der Schaum, der Abschaum oder die Emulsion ein Niveau oberhalb des vorgegebenen Niveaus in dem Behälter erreicht, und/oder eine obere Kante (29; 57; 86; 101; 125; 161) aufweisen, die zumindest teilweise unterhalb des Außenrandes des Behälters aber oberhalb des vorgegebenen Niveaus (N3; 57; 86; N6; 125; 161) plaziert ist, um den Durchlaß von Schaum, Abschaum oder Emulsion in die Aufnahmekammer durch Überlauf über wenigstens einen Teil des oberen Randes (29; 57; 86; 101; 125; 161) zu erlauben, wenn der Schaum, der Abschaum oder die Emulsion ein Niveau oberhalb des vorgegebenen Niveaus (N3; 57; 86; N6; 125; 161) in dem Behälter erreicht, und andererseits.
- einen Durchlaß (31; 41; 88; 107), der unterhalb des minimalen Niveaus (N2) der flüssigen Phase in dem Behälter plaziert ist, und/oder einen Rand (124; 160), der mit dem Boden und/oder einer Seitenwand einen Durchlaß definiert, der unterhalb des minimalen Niveaus (N2) der flüssigen Phase in dem Behälter plaziert ist aufweisen, und
daß die eine Seitenwand oder die Seitenwände (25; 56, 57; 81; 106; 122b; 152) in dem Behälter angeordnet sind, um im wesentlichen den Durchlaß von Schaum, Abschaum oder Emulsion in die wenigstens eine Nicht-Kochzone unterhalb des vorgegebenen Niveaus (N3; 57; 86; N6; 125; 161) zu verhindern.

5. Kochvorrichtung nach einem der vorherigen Ansprüche, wobei die Vorrichtung einen Korb besitzt, welcher dazu bestimmt ist, die zu kochenden Lebensmittel zu enthalten, wobei der Korb zum Kochen der Nahrungsmittel abgesenkt wird, **dadurch gekennzeichnet, daß** der Korb wenigstens eine oder mehrere Trennwände (122; 152) besitzt, die in der Weise angeordnet sind, daß sie, wenn der Korb in den Behälter abgesenkt ist, zwischen der Wand oder den Wänden des Korbs und der Seitenwand oder den Seitenwänden des Behälters eine oder mehrere Aufnahmekammern (127; 171) für Schaum, Abschaum oder Emulsion definieren, wobei die Wand oder die Wände (122; 152) des Korbs in der abgesenkten Position einerseits
- wenigstens eine Öffnung aufweisen, die unterhalb des Außenrandes des Behälters plaziert ist, um den Durchlaß von Schaum, Abschaum oder Emulsion durch die Öffnung in die Aufnahmekammer zu erlauben, wenn der Schaum, der Abschaum oder die Emulsion ein Niveau oberhalb des vorgegebenen Niveaus (N8; 125; 161) in dem Behälter erreicht, und/oder einen oberen Rand (125; 161) aufweist, der wenigstens teilweise unterhalb des Außenrandes des Behälters, aber wenigstens 2 cm, vorzugsweise wenigstens 5 cm oberhalb des maximalen Niveaus (N1) der Kochflüssigkeit in dem Behälter liegt, um den Durchlaß von Schaum, Abschaum oder Emulsion in die Aufnahmekammer (127; 171) durch Überlauf über wenigstens einen Teil des oberen Randes (125; 161) zu erlauben, wenn der Schaum, der Abschaum oder die Emulsion ein Niveau oberhalb des vorgegebenen Niveaus (N8; 125; 161) in dem Behälter erreicht, und andererseits
- einen Durchlaß, der unterhalb des minimalen Niveaus (N2) der flüssigen Phase liegt, wenn sich der Korb in der abgesenkten Position in dem Behälter befindet, und/oder einen Rand (124; 160), der mit dem Boden und/oder einer Seitenwand einen Durchlaß definiert, der unterhalb des minimalen Niveaus (N2) der flüssigen Phase liegt, wenn der Korb in der abgesenkten Position in dem Behälter ist, aufweisen, und
daß die Wand oder die Wände (122; 152) des Korbs in der abgesenkten Position in dem Behälter angeordnet sind, um im wesentlichen den Durchlaß von Schaum, Abschaum oder Emulsion in die Aufnahmekammer oder die Aufnahmekammern (127; 171) unterhalb des vorgegebenen Niveaus (N8; 125; 161) zu verhindern.

6. Kochvorrichtung nach dem Anspruch 5, **dadurch gekennzeichnet, daß** der Korb ein durchbrochener Korb ist, der einen Boden, eine oder mehrere Seitenflächen und einen oberen Rand aufweist, wobei der Korb entlang seiner einen oder seiner mehreren Seitenwände eine Trennwand oder mehrere Trennwände (122; 152) trägt, deren unterer Rand (124; 160) angeordnet, um sich unterhalb des minimalen Niveaus (N2) der flüssigen Phase zu erstrecken, wenn der Korb in den Behälter abgesenkt ist, und dessen oberer Rand (125; 161) angeordnet ist, um sich wenigstens 2 cm, vorzugsweise wenigstens 5 cm oberhalb des maximalen Niveaus (N1) von Kochflüssigkeit in dem Behälter zu erstrecken, wenn der Korb sich in der abgesenkten Position in dem Behälter befindet, und daß die Aufnahmekammer (127; 171) zwischen der Trennwand oder den Trennwänden (122; 152) des Korbs und der einen Seitenwand oder der Seitenwände des Behälters definiert ist, und daß die Trennwand oder Trennwände (122; 152) des Korbs in der abgesenkten Position in dem Behälter angeordnet sind, um im wesentlichen den gesamten Durchlaß von Schaum, Abschaum oder Emulsion in die Aufnahmekammer (127; 171) unterhalb des oberen Randes (125; 161) der Trennwand oder Trennwände des Korbes in der abgesenkten Position des Korbes zu verhindern.

7. Kochvorrichtung nach dem Anspruch 6, **dadurch gekennzeichnet, daß** die Trennwand oder Trennwände (152), welche durch den durchbrochenen Korb (150) getragen werden, von den Seitenwänden von diesem beabstandet sind und vorteilhafterweise außerhalb des Korbs in der Weise plaziert sind, daß sie eine Hülle oder einen Kasten (152) um den durchbrochenen Korb (150) bilden.

8. Kochvorrichtung nach dem Anspruch 6, **dadurch gekennzeichnet, daß** die Seitenwand oder die Seitenwände des Korbs von einer vollen Wand gebildet werden, deren unterer Rand (124) angeordnet ist, um den Durchlaß von Schaum, Abschaum oder Emulsion in die Aufnahmekammer unterhalb des Niveaus des oberen Randes (125) der Wand des Korbes im wesentlichen zu verhindern, wenn sich der Korb in der abgesenkten Position in dem Behälter befindet.

9. Kochvorrichtung nach dem Anspruch 7 oder 8, **dadurch gekennzeichnet, daß** die Wand (122b) eine Welligkeit oder Falten aufweist, die eine Reihe von im wesentlichen vertikalen Kanälen bilden, wenn sich der Korb in der abgesenkten Position in dem Behälter befindet.

10. Kochvorrichtung nach einem der Ansprüche 6 bis 9, **dadurch gekennzeichnet, daß** die Trennwand oder Trennwände und die durchbrochenen Teile des Korbes aus Materialien hergestellt sind, die im wesentlichen gleichen Dilatationskoeffizienten besitzen.

11. Vorrichtung nach einem der Ansprüche 1 bis 5, **dadurch gekennzeichnet, daß** der Behälter Rillen (24) aufweist, in welchen die Seitenränder der einen Trennwand (25; 40) gleiten, oder Schienen (54), entlang derer Rillen (61) gleiten, welche die Seitenwände einer Trennwand (55, 56) aufweisen.

12. Vorrichtung nach dem Anspruch 11, **dadurch gekennzeichnet, daß** die Trennwand aus einem Material besteht, die einen thermischen Dilatationskoeffizienten besitzt, der höchstens so groß wie der thermische Dilatationskoeffizient des Behälters oder des Teils des Behälters, der zwischen den Schienen liegt, ist.

13. Vorrichtung nach Anspruch 11 oder 12, **dadurch gekennzeichnet, daß** die Rillen oder Schienen (24; 54) sich jeweils entlang einer Seitenwand des Behälters auf einer Höhe erstrecken, die von einem Niveau, welches unterhalb des minimalen Flüssigkeitsniveaus in dem Behälter (N2) liegt, bis zu einem Niveau, das oberhalb des maximalen Flüssigkeitsniveaus (N1) in dem Behälter, vorzugsweise auf einem Niveau nahe des vorgegebenen Niveaus liegt, von dem aus ein Schaum, ein Abschaum oder eine Emulsion in die Aufnahmekammer für den Schaum, den Abschaum oder die Emulsion aus der Kochzone tritt, geht.

14. Kochvorrichtung nach einem der Ansprüche 1 bis 5, **dadurch gekennzeichnet, daß** die Trennwand oder Trennwände einen im wesentlichen kreisförmigen, rechteckigen oder quadratischen Rahmen (81) bilden, der auf dem Boden des Behälters aufliegt und/oder durch eine oder mehrere Seitenwände des Behälters getragen wird.

15. Kochvorrichtung nach einem der vorherigen Ansprüche, **dadurch gekennzeichnet, daß** sie einen elektrischen Widerstand besitzt, der dem Boden des Behälters zugeordnet oder unterhalb von diesem angeordnet ist, und/oder einen elektrischen Widerstand (4), der in dem Behälter angeordnet ist, aufweist.

16. Kochvorrichtung nach einem der vorherigen Ansprüche, **dadurch gekennzeichnet, daß** die Vorrichtung eine Friteuse ist, wobei die Friteuse vorzugsweise einen Korb in vorteilhafter Weise mit einem multifunktionellen Griff und/oder einem Deckel und/oder einem Filtrationssystem aufweist.

17. Verfahren zum Kochen von Nahrungsmitteln in einem Ölbad und/oder flüssigem Fett mittels einer Friteuse nach dem Anspruch 16, bei welchem man das Bad mittels einer Wand in eine Kochzone, in welcher das flüssige Bad in Kontakt mit einem elektrischen Widerstand oder mit einer wand, die dem elektrischen Widerstand zugeordnet ist, steht, und eine Nicht-Kochzone, die im wesentlichen durch einen Wärmetransport von dem Öl der Kochzone zu der Nicht-Kochzone erwärmt werden wird, unterteilt, und bei welchem man die Lebensmittel in der Kochzone in der Weise kocht, daß im Falle einer Bildung von Schaum oder einer Emulsion oberhalb des vorgegebenen Niveaus der Schaum oder die Emulsion in die Nicht-Kochzone tritt, wo sie sich in die Form von Öl oder von flüssigem Fett umwandelt, wobei Öl und Fett von der Nicht-Kochzone dann in die Kochzone tritt.

## Claims

1. Domestic or semi-industrial apparatus for cooking or heat-treatment by immersion, comprising a cooking basin (20, 50, 80, 100) intended to contain a cooking liquid for cooking a food forming a foam or froth or emulsion above the upper level of a liquid phase or bath during cooking or at least during part thereof, the said basin possessing a bottom, one or more side walls, and an upper rim, the said basin bearing a mark (N1) corresponding to the maximum level of cooking liquid in the basin and being associated with means defining within the basin a food cooking zone and a non-cooking zone and a passage between the cooking and non-cooking zones which is situated below the maximum level (N1) of cooking liquid in the basin, **characterized in that** it comprises or is associated with means (25; 40, 55, 56, 81, 101, 106, 120, 122b, 152) defining a non-cooking zone within the basin and allowing foam, froth or emulsion to pass from the cooking zone into the non-cooking zone when the said foam, froth or emulsion reaches a level above a predetermined level (N3; 57; 86; N6; 125; 161) in the basin which is located at least 2 centimetres, and preferably at least 5 centimetres, above the maximum level (N1) of cooking liquid in the basin, the said foam or froth or emulsion being transformed into liquid in the non-cooking zone (28; 63, 64; 90; 103, 110; 127; 171), the said means (25; 56, 57; 81; 106; 122b; 152) substantially preventing froth, foam or emulsion from passing into the said non-cooking zone (28; 63, 64; 90; 103, 110; 127; 171) at a level situated below the said predetermined level (N3; 57; 86; N6; 125; 161); and **in that** it comprises means guiding the said liquid formed by transformation of the said foam or froth or emulsion within the basin to a level (31; 59; 88; 107; 124; 160) situated below the maximum level (N1) of cooking liquid in the basin.

2. Apparatus according to Claim 1, **characterized in that** the said means defining a non-cooking zone within the basin and allowing foam, froth or emulsion to pass from the cooking zone into the non-cooking zone comprise a partition (25; 56, 57; 81; 106; 122b; 152) having at least one orifice (45) situated below the rim (3) of the basin to allow foam, froth or emulsion to pass through the said orifice (45) into the non-cooking zone when the said foam, froth or emulsion reaches a predetermined level corresponding to the level of the said orifice (45) in the basin and/or having an upper edge (29; 57; 86; 101; 125; 161) situated at least partly below the rim (3, 104) of the basin to allow.foam, froth or emulsion to pass, by overflowing at least part of the said upper edge (29; 57; 86; 101; 125; 161), into the non-cooking zone when the said foam, froth or emulsion reaches a level above the said predetermined level (N3; 57; 86; N6; 125; 161) in the basin; and **in that** the said partition is arranged in the basin so as to substantially prevent froth, foam or emulsion from passing into the non-cooking zone below the said predetermined level (N3; 57; 86; N6; 125; 161).

3. Apparatus according to Claim 1 or Claim 2, **characterized in that** the non-cooking zone has a volume of not less than 2% of the volume of the basin.

4. Apparatus according to any one of the preceding claims, **characterized in that** it comprises one or more partitions (25; 56, 57; 81; 106; 122b; 152) extending inside the basin along one or more side walls thereof so as to define, between the said partition or partitions and the said side wall or walls of the basin, one or more non-cooking zones (28; 63, 64; 90; 103, 110; 127; 171) for receiving foam, froth or emulsion from the cooking zone, the said partition or partitions (25; 56, 57; 81; 106; 122b; 152) having, on the one hand,
- at least one orifice (45) situated below the rim of the basin but above the said predetermined level to allow foam, froth or emulsion to pass through the said orifice (45) into the receiving chamber when the said foam, froth or emulsion reaches a level above the said predetermined level in the basin and/or having an upper edge (29; 57; 86; 101; 125; 161) situated at least partly below the rim of the basin but above the said predetermined level (N3; 57; 86; N6; 125; 161) to allow foam, froth or emulsion to pass, by overflowing at least part of the said upper edge (29; 57; 86; 101; 125; 161), into the receiving chamber when the said foam, froth or emulsion reaches a level above the said predetermined level (N3; 57; 86; N6; 125; 161) in the basin, and, on the other hand,
- a passage (31, 41, 88, 107) situated below the minimum level (N2) of liquid phase in the basin and/or an edge (124, 160) defining, with the bottom and/or a side wall, a passage situated below the minimum level (N2) of liquid phase in the basin; and
**in that** the partition or partitions (25; 56, 57; 81; 106; 122b; 152) [is or] are arranged in the basin so as to substantially prevent froth, foam or emulsion from passing into the non-cooking zone or zones below the said predetermined level (N3; 45; 57; 86; N6; 125; 161).

5. Cooking apparatus according to any one of the preceding claims, the said apparatus comprising at least one basket intended to contain the foods to be cooked, the said basket being lowered into the basin to cook the foods, **characterized in that** the basket carries at least one or more partitions (122; 152) arranged so as to define between the said partition or partitions of the basket and one or more side walls of the basin when the basket is lowered into the basin, one or more receiving chambers (127; 171) for foam, froth or emulsion, the said partition or partitions (122; 152) of the basket when in the lowered position having, on the one hand,
- at least one orifice situated below the rim of the basin to allow foam, froth or emulsion to pass through the said orifice into the receiving chamber when the said foam, froth or emulsion reaches a level above the said predetermined level (N8; 125; 161) in the basin and/or having an upper edge (125; 161) situated at least partly below the rim of the basin but at least 2 centimetres, and preferably at least 5 centimetres, above the maximum level (N1) of cooking liquid in the basin, to allow foam, froth or emulsion to pass, by overflowing at least part of the said upper edge (125; 161), into the receiving chamber (127; 171) when the said foam, froth or emulsion reaches a level above the said predetermined level (N8, 125, 161) in the basin, and, on the other hand,
- a passage situated below the minimum level (N2) of liquid phase when the basket is in the lowered position in the basin and/or an edge (124, 160) defining, with the bottom and/or a side wall, a passage situated below the minimum level (N2) of liquid phase when the basket is in the lowered position in the basin; and
**in that** the partition or partitions (122; 152) of the basket when in the lowered position [is or] are arranged in the basin so as to substantially prevent froth, foam or emulsion from passing into the receiving chamber or chambers (127; 171) below the said predetermined level (N8, 125, 161).

6. Cooking apparatus according to Claim 5, **characterized in that** the basket is an open-work or perforated basket having a bottom, one or more lateral faces, and an upper edge, the said basket carrying along its lateral face or faces one or more partitions (122, 152) whose lower edge (124, 160) is arranged to reach below the minimum level (N2) of the liquid phase when the basket is lowered into the basin and whose upper edge (125, 161) is arranged to reach at least 2 centimetres, and preferably at least 5 centimetres, above the maximum level (N1) of cooking liquid in the basin when the basket is in the lowered position in the basin; **in that** the receiving chamber (127, 171) is defined between the partition or partitions (122, 152) of the basket and the side wall or walls of the basin; and **in that** the partition or partitions (122, 152) of the basket in the lowered position in the basin are arranged so as to substantially prevent froth, foam or emulsion from passing into the receiving chamber (127, 171) below the level of the upper edge (125, 161) of the partition or partitions of the basket in the lowered position of the basket.

7. Cooking apparatus according to Claim 6, **characterized in that** the partition or partitions (152) carried by the open-work or perforated basket (150) are spaced apart from the side walls of the latter, and advantageously are situated outside the basket so as to form an enclosure or frame (152) around the open-work or perforated basket (150).

8. Cooking apparatus according to Claim 6, **characterized in that** the side walls of the basket are constituted by a continuous panel whose lower edge (124) is arranged so as to substantially prevent froth, foam or emulsion from passing into the receiving chamber below the level of the upper edge (125) of the basket wall when the basket is in the lowered position in the basin.

9. Cooking apparatus according to Claim 7 or Claim 8, **characterized in that** the said partition or panel (122b) has corrugations or folds forming a series of approximately vertical channels when the basket is in the lowered position in the basin.

10. Cooking apparatus according to any one of Claims 6 to 9, **characterized in that** the partition or partitions and the open-work or perforated parts of the basket are made of materials possessing approximately the same coefficient of expansion.

11. Apparatus according to any one of Claims 1 to 5, **characterized in that** the basin has channels (24) in which the lateral edges of a partition (25; 40) slide, or rails (54) along which channels (61) provided at the lateral edges of a partition (55, 56) slide.

12. Apparatus according to Claim 11, **characterized in that** the partition is made of a material possessing a coefficient of thermal expansion not greater than the coefficient of thermal expansion of the basin or of the part of the basin situated between the said rails.

13. Apparatus according to Claim 11 or Claim 12, **characterized in that** the channels or rails (24, 54) each extend along a side wall of the basin over a height reaching from a level situated below the minimum level of liquid in the basin (N2) to a level situated above the maximum level (N1) of liquid in the basin, advantageously to a level close to the predetermined level beyond which a foam, froth or emulsion passes into the receiving chamber for the foam, froth or emulsion coming from the cooking zone.

14. Cooking apparatus according to any one of Claims 1 to 5, **characterized in that** the partition [forms,] or partitions form, an approximately circular, rectangular or square frame (81) resting on the bottom of the basin and/or carried by one or more side walls of the basin.

15. Cooking apparatus according to any one of the preceding claims, **characterized in that** it comprises an electric heating element placed under, or associated with, the bottom of the basin and/or an electric heating element (4) placed in the basin.

16. Cooking apparatus according to any one of the preceding claims, **characterized in that** the said apparatus is a fryer, the said fryer preferably comprising a basket advantageously with multifunctional handle and/or a cover and/or a filtering system.

17. Method of cooking foods in a bath of oil and/or liquid fat by means of a fryer according to Claim 16, wherein the bath is divided by a partition into a cooking zone in which the liquid bath is in contact with the electric heating element or with the wall associated with the electric heating element, and a non-cooking zone heated essentially by transfer of heat from the oil in the cooking zone to the non-cooking zone, and wherein the foods are cooked in the cooking zone so that only if foam or emulsion forms above a predetermined level, does foam or emulsion pass into the non-cooking zone, where it is transformed into oil or liquid fat, oil or fat then passing from the non-cooking zone [back] into the cooking zone.
